# EUROPEAN PATENT APPLICATION

(11) **EP 4 350 616 A1**
(43) Date of publication of application: **10.04.2024**
(21) Application number: 22815546.1
(22) Date of filing: 04.02.2022
(51) Int. Cl.: G06T 7/00, G06F 16/56

(54) **PERSON RETRIEVAL DEVICE, PERSON RETRIEVAL SYSTEM, PERSON RETRIEVAL METHOD, AND PERSON RETRIEVAL PROGRAM**

(30) Priority: 04.06.2021 JP 2021094044
(71) Applicant: MITSUBISHI ELECTRIC CORPORATION, Chiyoda-ku Tokyo 100-8310 (JP)
(72) Inventor: KISHISHITA, Nariaki, Tokyo 100-8310 (JP); HATTORI, Ryoji, Tokyo 100-8310 (JP); ONISHI, Yuki, Tokyo 100-8310 (JP)
(74) Representative: Meissner Bolte Partnerschaft mbB
(86) International application number: PCT/JP2022/004351
(87) International publication number: WO 2022/254787

(57) **Abstract**

A person retrieval device that retrieves an image including a person as a retrieval target from among a plurality of images photographed by a plurality of cameras, the person retrieval device including: a similarity calculating unit (170) to refer to, when acquiring a whole-body image feature amount and a face image feature amount of a person in a specific person image in which the person as a retrieval target is indicated, a database that stores a whole-body image feature amount, a face image feature amount, and photographing information including camera identification information, a photographing position, and a photographing date and time in association with each other for each of images output from the plurality of cameras, calculate a first similarity indicating a similarity between the whole-body image feature amount of the specific person image and the whole-body image feature amount in the database, and calculate a second similarity indicating a similarity between the face image feature amount of the specific person image and the face image feature amount in the database; a classification unit (180) to determine whether the first similarity exceeds a first threshold and determines whether the second similarity exceeds a second threshold; and a person retrieval unit (190) to acquire, from the database, photographing information associated with a face image feature amount in which the second similarity exceeds the second threshold by using a determination result of the classification unit, calculate an area and a time period in which the person indicated in the specific person image is likely to be photographed by using the acquired photographing information, and generate specific person photographing information including camera identification information in the area and photographing date and time of the time period.

## Description

### TECHNICAL FIELD

The present invention relates to a person retrieval device that retrieves an image including a specific person from among a plurality of images.

### BACKGROUND ART

Among the techniques for identifying a person included in an image, there is a technique for identifying a person using a feature amount of the person in an image.

For example, Patent Literature 1 discloses that a first feature amount related to the face of a person and a second feature amount related to the body of the person are extracted from an image including the person imaged by an imaging unit (camera), and the person is identified on the basis of a third feature amount calculated by assigning a weight to each of the extracted first feature amount and second feature amount.

### CITATION LIST

### PATENT LITERATURE

Patent Literature 1: JP 2019- 23 785 A

### SUMMARY OF THE INVENTION

### TECHNICAL PROBLEM

However, in a case where a plurality of images are images photographed by a plurality of cameras, for example, images photographed under different photographing conditions are included, and the feature amounts of a person in the images are often different for each photographing condition.

In such a case, in the conventional technique, since the accuracy of identifying a person varies, there is a problem that the accuracy of retrieving an image including a specific person from among images photographed by the plurality of cameras tends to decrease.

In the person identification device described in Patent Literature 1, it is difficult to optimally determine the weighting so as to satisfy the photographing conditions of all the plurality of cameras, and the above problem cannot be solved still.

An object of the present invention is to provide a person retrieval device that retrieves an image including a specific person from among images photographed by a plurality of cameras with high accuracy.

### SOLUTION TO THE PROBLEM

A person retrieval device according to the present invention is a person retrieval device that retrieves an image including a person as a retrieval target from among a plurality of images photographed by a plurality of cameras, the person retrieval device including: a similarity calculating unit to refer to, when acquiring a whole-body image feature amount and a face image feature amount of a person in a specific person image in which the person as a retrieval target is indicated, a database that stores a whole-body image feature amount, a face image feature amount, and photographing information including camera identification information, a photographing position, and a photographing date and time in association with each other for each of images output from the plurality of cameras, calculate a first similarity indicating a similarity between the whole-body image feature amount of the specific person image and the whole-body image feature amount in the database, and calculate a second similarity indicating a similarity between the face image feature amount of the specific person image and the face image feature amount in the database; a classification unit to determine whether the first similarity exceeds a first threshold and determines whether the second similarity exceeds a second threshold; and a person retrieval unit to acquire, from the database, photographing information associated with a face image feature amount in which the second similarity exceeds the second threshold by using a determination result of the classification unit, calculate an area and a time period in which the person indicated in the specific person image is likely to be photographed by using the acquired photographing information, and generate specific person photographing information including camera identification information in the area and photographing date and time of the time period.

### ADVANTAGEOUS EFFECTS OF THE INVENTION

According to the present invention, it is possible to provide a person retrieval device that retrieves an image including a specific person from among images photographed by a plurality of cameras with high accuracy.

### BRIEF DESCRIPTION OF DRAWINGS

FIG. 1 is a diagram illustrating a person retrieval system including a person retrieval device according to the present invention.
FIG. 2 is a diagram illustrating a configuration of a person retrieval system including a person retrieval device according to a first embodiment of the present invention.
FIG. 3 is a view illustrating an example of an image used in the present invention.
FIG. 4 is a flowchart illustrating data generation processing in the person retrieval device according to the first embodiment of the present invention.
FIG. 5 is a flowchart illustrating person retrieval processing in the person retrieval device according to the first embodiment of the present invention.
FIG. 6 is a flowchart illustrating detailed processing in ST180 in FIG. 7.
FIG. 7 is a diagram illustrating a first modification of the configuration of the person retrieval system including the person retrieval device according to the first embodiment of the present invention.
FIG. 8 is a diagram illustrating a second modification of the configuration of the person retrieval system including the person retrieval device according to the first embodiment of the present invention.
FIG. 9 is a diagram illustrating a configuration of a person retrieval system including a person retrieval device according to a second embodiment of the present invention.
FIG. 10 is a flowchart illustrating correction value update processing in the person retrieval device according to the second embodiment of the present invention.
FIG. 11 is a flowchart illustrating processing of extracting an image using a whole-body image feature amount in the person retrieval device according to the second embodiment of the present invention.
FIG. 12 is a diagram illustrating a configuration of a person retrieval system including a person retrieval device according to a third embodiment of the present invention.
FIG. 13 is a diagram showing a configuration of a threshold adjusting unit in the present invention.
FIG. 14 is a flowchart illustrating first threshold adjustment processing in the present invention.
FIG. 15 is a flowchart illustrating second threshold adjustment processing in the present invention.
FIG. 16 is a diagram illustrating a first example of a hardware configuration of the person retrieval device according to the present invention.
FIG. 17 is a diagram illustrating a second example of a hardware configuration of the person retrieval device according to the present invention.

### DESCRIPTION OF EMBODIMENTS

In order to explain the present invention in more detail, a mode for carrying out the present invention will be described below with reference to the accompanying drawings.

### First Embodiment.

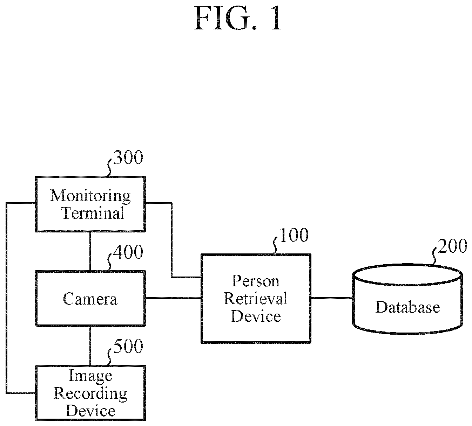

FIG. 1 is a diagram illustrating a person retrieval system 1 including a person retrieval device 100 according to the present invention.

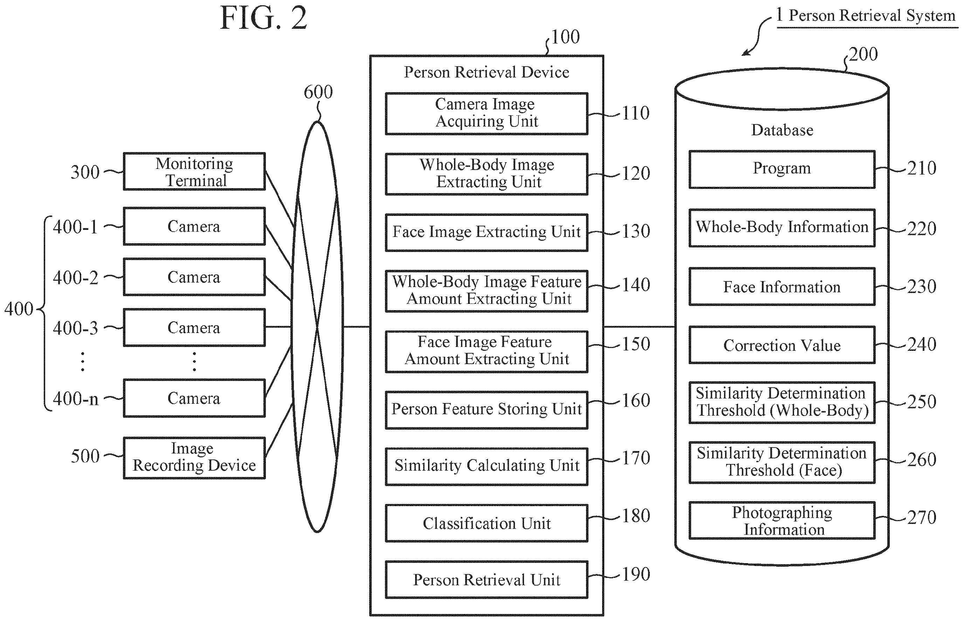

FIG. 2 is a diagram illustrating a configuration of the person retrieval system 1 including the person retrieval device 100 according to a first embodiment of the present invention.

The person retrieval system 1 illustrated in FIG. 1 includes the person retrieval device 100, a database 200, a monitoring terminal 300, a camera 400, and an image recording device 500.

In the person retrieval system 1, the person retrieval device 100 is communicably connected to the database 200, the monitoring terminal 300, the camera 400, and the image recording device 500.

In addition, the monitoring terminal 300, the camera 400, and the image recording device 500 are communicably connected to each other.

The person retrieval system 1 is a system that retrieves an image including a person as a retrieval target from among a plurality of images photographed by a plurality of cameras 400 (400-n: n is any integer of 1 or more).

In the person retrieval system 1, for example, as illustrated in FIG. 2, the person retrieval device 100 and the database 200 are connected by a communication line or the like, and the person retrieval device 100, the monitoring terminal 300, the camera 400, and the image recording device are connected to each other via a communication network 600 such as an IP network. Note that the database 200 may also be configured to be connected using the communication network 600.

The person retrieval device 100 retrieves an image including a person as a retrieval target from among a plurality of images photographed by the plurality of cameras 400.

In addition, the person retrieval device 100 extracts a whole-body image feature amount and a face image feature amount of the person included in the image from the images photographed by each camera 400, and stores the same in the database 200 in association with photographing information indicating photographing conditions of the image.

The person retrieval device 100 receives, for example, a specific person image including a person as a retrieval target and a retrieval request from the monitoring terminal 300 via the communication network 600.

Further, when acquiring the whole-body image feature amount and the face image feature amount of the person in the specific person image in which the person as the retrieval target is indicated, the person retrieval device 100 refers to the database 200, calculates a first similarity indicating the similarity between the whole-body image feature amount of the specific person image and the whole-body image feature amount in the database 200, and calculates a second similarity indicating the similarity between the face image feature amount of the specific person image and the face image feature amount in the database 200. In addition, the person retrieval device 100 determines whether the first similarity exceeds a first threshold and determines whether the second similarity exceeds a second threshold. In addition, the person retrieval device 100 acquires the photographing information associated with the face image feature amount in which the second similarity exceeds the second threshold from the database 200 using the determination result, calculates an area and a time period in which the person indicated in the specific person image is likely to be photographed using the acquired photographing information, and generates specific person photographing information including camera identification information in the area and the time period.

The person retrieval device 100 outputs, for example, the specific person photographing information as a retrieval result to the monitoring terminal 300 via the communication network 600. The retrieval result may include an image specified as the specific person photographing information.

Details of the person retrieval device 100 will be described later.

The database 200 stores the whole-body image feature amount, the face image feature amount, and photographing information 270 including the camera identification information, a photographing position, and a photographing date and time in association with each other for each of images output from the plurality of cameras 400.

More specifically, the database 200 includes a program 210, whole body information 220, face information 230, a correction value 240, a whole body similarity determination threshold (first threshold) 250, a face similarity determination threshold (second threshold) 260, and photographing information 270.

The program 210 is a program for operating a computer as the person retrieval device 100.

The whole-body information 220 includes the whole-body image feature amount for each image and an identification number of a person. The whole-body image feature amount is a value obtained by quantifying a feature based on clothes, a physique, a camera angle of view, and the like, and is a value indicating a whole-body feature of each person.

The face information 230 includes a face image feature amount for each image and an identification number of a person. The face image feature amount is a value obtained by quantifying a face feature of each person.

The correction value 240 is set according to a photographing condition for each camera, and is used when a whole-body image feature amount extracting unit 140 to be described later extracts the whole-body image feature amount.

The whole-body similarity determination threshold (first threshold) 250 is used when a classification unit 180 described later determines the classification using the first similarity indicating the similarity between the whole-body image feature amount of the specific person image and the whole-body image feature amount in the database 200.

The face similarity determination threshold (second threshold) 260 is used when the classification unit 180 described later determines the classification using the second similarity indicating the similarity between the face image feature amount of the specific person image and the face image feature amount in the database 200.

The photographing information 270 indicates photographing conditions for each camera, and includes at least camera identification information, a photographing position, and a photographing date and time. The camera identification information is, for example, a camera number different for each camera.

In the database 200, when an instruction to store information is received, information is newly added or the information is updated.

In addition, the database 200 presents the stored data in response to a request from the person retrieval device 100.

Note that the database 200 may be configured to be included inside the person retrieval device 100.

The monitoring terminal 300 requests the person retrieval device 100 to retrieve an image in which the same person as the person shown in the specific person image indicating the person as the retrieval target is photographed.

In addition, the monitoring terminal 300 is configured to be able to acquire an image photographed by the camera 400 via the communication network 600.

In addition, the monitoring terminal 300 is configured to be able to acquire an image recorded in the image recording device 500 via the communication network 600.

In addition, the monitoring terminal 300 is configured to be able to acquire an image from the outside other than the camera 400 and the image recording device 500.

The specific person image is an image designated from among the images acquired by the monitoring terminal 300.

After requesting the image retrieval, the monitoring terminal 300 receives the retrieval result from the person retrieval device 100.

The retrieval result is, for example, specific person photographing information generated in the person retrieval device 100. In this case, the monitoring terminal 300 acquires an image from the camera 400 or the image recording device 500 using the specific person photographing information. However, in a case where an image is included in the retrieval result, the monitoring terminal 300 does not need to perform processing using the specific person photographing information.

The camera 400 indicates a plurality of cameras 400-1, 400-2, 400-3,..., and 400-n, and each performs photographing and outputs images.

The plurality of cameras 400 are, for example, monitoring cameras installed so as to photograph different photographing target ranges.

Each of the images photographed by the plurality of cameras is assigned with a camera identification number for identifying each camera 400 and a photographing date and time. Furthermore, information indicating a photographing position may be further assigned.

The image recording device 500 records the image output from the camera 400, the camera identification information, and the photographing date and time. Furthermore, in a case where the image includes information indicating the photographing position, the information indicating the photographing position may be recorded.

Details of the person retrieval device 100 will be described.

The person retrieval device 100 includes a camera image acquiring unit 110, a whole-body image extracting unit 120, a face image extracting unit 130, a whole-body image feature amount extracting unit 140, a face image feature amount extracting unit 150, a person feature storing unit 160, a similarity calculating unit 170, a classification unit 180, a person retrieval unit 190, a control unit (not illustrated), and the like.

The camera image acquiring unit 110 acquires images (camera images) photographed by the plurality of cameras 400 and photographing information.

Specifically, the camera image acquiring unit 110 receives camera images distributed from the plurality of cameras 400 at a constant frame rate, and outputs the received camera images to the whole-body image extracting unit 120 and the face image extracting unit 130.

An image used in the present invention will be described.

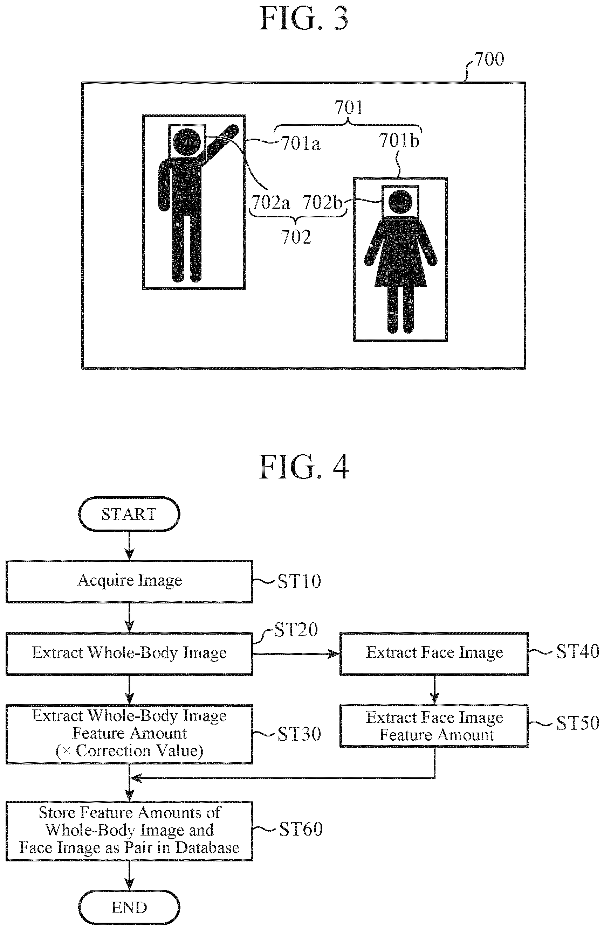

FIG. 3 is a view illustrating an example of an image used in the present invention.

An image 700 illustrated in FIG. 3 includes a whole-body image 701 (701a, 701b) for each person and a face image 702 (702a, 702b) for each person.

However, although the image 700 includes two persons, the number of persons included in the image varies depending on the image.

Furthermore, in the image 700, the whole-body image 701 illustrates the whole-body from the tip of the head to the tip of the foot, but it is not limited thereto. For example, the whole-body image 701 may be an image from which the features of the body can be extracted as compared with the face image 702, and may be an image including a part other than the face in the whole-body.

The whole-body image extracting unit 120 receives the image and extracts the whole-body image 701 of the person from the received image.

For example, the whole-body image extracting unit 120 extracts the whole-body image 701 of the person from the camera image acquired by the camera image acquiring unit 110.

In addition, the whole-body image extracting unit 120 receives the specific person image from the monitoring terminal 300, for example, and extracts the whole-body image 701 of the person from the received specific person image.

For example, when receiving the image, the whole-body image extracting unit 120 extracts the whole-body area of the person on the basis of the image of the person learned in advance by machine learning such as deep learning, and outputs the image (whole-body image) of the whole-body area to the whole-body image feature amount extracting unit 140.

The face image extracting unit 130 receives an image and extracts the face image 702 from the received image.

For example, the face image extracting unit 130 receives a camera image from the camera image acquiring unit 110, and extracts a face image 702 of a person from the received image.

In addition, the face image extracting unit 130 receives the specific person image from the monitoring terminal 300, for example, and extracts the face image 702 of the person from the received specific person image.

For example, when receiving an image, the face image extracting unit 130 extracts a face area of a person on the basis of an image of a face learned in advance by machine learning such as deep learning, and outputs the image (face image) of the face area to the face image feature amount extracting unit 150.

Note that the face image extracting unit 130 may be configured to receive the whole-body image 701 extracted by the whole-body image extracting unit 120. In this case, the face image extracting unit 130 extracts the face image 702 from the whole-body image 701.

The whole-body image feature amount extracting unit 140 extracts the whole-body image feature amount from the whole-body image extracted by the whole-body image extracting unit 120.

Specifically, the whole-body image feature amount extracting unit 140 extracts the whole-body image feature amount from the whole-body image of the camera image acquired by the camera image acquiring unit 110, and outputs the whole-body image feature amount to the person feature storing unit 160. In this case, when receiving the whole-body image, the whole-body image feature amount extracting unit 140 extracts a whole-body image feature amount (X1) obtained by quantifying the features by the clothes, the physique, the camera angle of view, and the like on the basis of the image of the person learned in advance by machine learning such as deep learning, and outputs the whole-body image feature amount of the camera image to the person feature storing unit 160.

Specifically, the whole-body image feature amount extracting unit 140 extracts the whole-body image feature amount from the whole-body image of the specific person image, and outputs the whole-body image feature amount to the similarity calculating unit 170. In this case, when receiving the whole-body image of the specific person image, the whole-body image feature amount extracting unit 140 extracts the whole-body image feature amount (X1) obtained by quantifying the features by the clothes, the physique, the camera angle of view, and the like on the basis of the image of the person learned in advance by machine learning such as deep learning, and outputs the whole-body image feature amount of the specific person image to the similarity calculating unit 170.

The face image feature amount extracting unit 150 extracts the face image feature amount from the face image extracted by the face image extracting unit 130.

Specifically, the face image feature amount extracting unit 150 extracts the face image feature amount from the face image of the camera image acquired by the camera image acquiring unit 110, and outputs the face image feature amount to the person feature storing unit 160. In this case, when receiving the face image, the face image feature amount extracting unit 150 extracts a face image feature amount (Y1) obtained by quantifying the face feature on the basis of the face image learned in advance by machine learning such as deep learning, for example, and outputs the face image feature amount of the camera image to the person feature storing unit 160.

Specifically, the face image feature amount extracting unit 150 extracts the face image feature amount from the face image of the specific person image and outputs the face image feature amount to the similarity calculating unit 170. In this case, when receiving the face image, the face image feature amount extracting unit 150 extracts the face image feature amount (Y1) obtained by quantifying the face feature on the basis of the face image learned in advance by machine learning such as deep learning, for example, and outputs the face image feature amount of the specific person image to the similarity calculating unit 170.

The person feature storing unit 160 acquires the whole-body image feature amount and the face image feature amount of the image photographed for each camera and the photographing information of the image, and stores the acquired whole-body image feature amount, face image feature amount, and photographing information in the database 200 in association with each other.

Specifically, the person feature storing unit 160 associates the whole-body image feature amount and the face image feature amount extracted from the same image, and also stores the camera number, the photographing position, the photographing date and time, the whole-body image, a thumbnail image obtained by cutting out the face image, and the like.

When acquiring the whole-body image feature amount and the face image feature amount of the person in the specific person image in which the person as the retrieval target is indicated, the similarity calculating unit 170 refers to the database 200, calculates a first similarity indicating a similarity (similarity of the whole-body image) between the whole-body image feature amount of the specific person image and the whole-body image feature amount in the database 200, and calculates a second similarity indicating a similarity (similarity of the face image) between the face image feature amount of the specific person image and the face image feature amount in the database 200.

The similarity indicates a degree of similarity between the compared images. For example, the similarity takes a value from 0 to 1, and the closer to 1, the higher the similarity.

The classification unit 180 determines whether the first similarity exceeds a first threshold and determines whether the second similarity exceeds a second threshold.

The classification unit 180 classifies a set of the whole-body image feature amount, the face image feature amount, the photographing information, and the thumbnail image using the determination result, and outputs the set information (set information) together with classification information indicating the classification depending on the classification result. The set information includes the classification information in addition to the whole-body image feature amount, the face image feature amount, the photographing information, and the thumbnail image.

Specifically, the classification unit 180 uses the determination result to perform classification as Classification 1 to Classification 4 below.
Classification 1: Both the similarity of the whole-body image and the similarity of the face image exceed the threshold
Classification 2: Only the similarity of the face image exceeds the threshold
Classification 3: Only the similarity of the whole-body image exceeds the threshold
Classification 4: Both the similarity of the whole-body image and the similarity of the face image are below the threshold.

The person retrieval unit 190 acquires, from the database 200, the photographing information associated with the face image feature amount in which the second similarity exceeds the second threshold by using the determination result of the classification unit 180, calculates an area and a time period in which the person indicated in the specific person image is likely to be photographed using the acquired photographing information, and generates the specific person photographing information including the camera identification information in the area and the time period.

Specifically, the person retrieval unit 190 receives the specific person image together with the retrieval request from the monitoring terminal 300, and outputs the specific person image to the whole-body image extracting unit 120 and the face image extracting unit 130.

After outputting the specific person image to the whole-body image extracting unit 120 and the face image extracting unit 130, the person retrieval unit 190 receives the information output from the classification unit 180, and notifies the monitoring terminal 300 of the retrieval result using the classification information and the set information.

More specifically, for example, the person retrieval unit 190 selects a certain number of pieces of the set information of the Classification 1 and the Classification 2 in descending order of the similarity (second similarity) of the face images. The certain number is not particularly limited as long as it is a number necessary as a retrieval result.

In addition, the person retrieval unit 190 acquires information such as a camera position, a camera adjacency relation, a relative distance, and the like by using the set information of the Classification 1 and the Classification 2, and calculates the area and the time period in which the person as the retrieval target indicated in the specific person image is likely to be photographed.

The person retrieval unit 190 selects set information including the camera identification information in the area and the photographing date and time in the time period from among the pieces of set information of Classification 3 other than Classification 1 and Classification 2 by using the calculated area and time period.

The person retrieval unit 190 selects a certain number of pieces of set information from the selected set information in descending order of the similarity (first similarity) of the whole-body image.

The person retrieval unit 190 generates the specific person photographing information including the camera identification information and the time period by using the set information of the Classification 1 and the Classification 2 and the selected set information of the Classification 3.

The person retrieval unit 190 outputs the specific person photographing information as a retrieval result.

Here, the person retrieval unit 190 may perform thinning such as not selecting a plurality of images of the same camera within a certain period of time in order to avoid bias of retrieval results in a specific camera or time period.

In this case, when a plurality of pieces of camera identification information indicating the same camera are included in generating the specific person photographing information, the person retrieval unit 190 thins out the camera identification information indicating the same camera at predetermined time intervals.

The person retrieval unit 190 may further output, as the retrieval result, the specific person photographing information and the image photographed by the camera indicated by the camera identification information of the specific person photographing information to the monitoring terminal 300 that has requested the retrieval.

The processing of the person retrieval device 100 will be described.

First, processing of generating and storing data of the database 200 referred to by the person retrieval device 100 will be described.

FIG. 4 is a flowchart illustrating data generation processing in the person retrieval device 100 according to the first embodiment of the present invention.

The person retrieval device 100 starts processing, for example, when a control unit (not illustrated) receives an instruction to start processing.

The camera image acquiring unit 110 acquires an image (step ST10).

Specifically, the camera image acquiring unit 110 acquires images and photographing information respectively photographed by a plurality of cameras.

The whole-body image extracting unit 120 receives the camera image from the camera image acquiring unit 110, and extracts the whole-body image 701 of the person from the image acquired by the camera image acquiring unit 110 (step ST20).

The whole-body image extracting unit 120 outputs the whole-body image 701 to the whole-body image feature amount extracting unit 140.

The whole-body image feature amount extracting unit 140 extracts the whole-body image feature amount from the whole-body image extracted by the whole-body image extracting unit 120 (step ST30).

Specifically, the whole-body image feature amount extracting unit 140 extracts the whole-body image feature amount from the whole-body image of the camera image acquired by the camera image acquiring unit 110, and outputs the whole-body image feature amount to the person feature storing unit 160. The whole-body image feature amount extracting unit 140, when receiving the whole-body image, extracts the whole-body image feature amount (X1), and outputs the whole-body image feature amount of the camera image to the person feature storing unit 160.

At this time, the whole-body image feature amount extracting unit 140 refers to a correction value for each camera in the database 200, and corrects (× correction value) the whole-body image feature amount by multiplying the whole-body image feature amount by the correction value. Note that, as will be described later, the correction may be performed on the similarity of the whole-body image feature amounts.

The face image extracting unit 130 receives the camera image from the camera image acquiring unit 110 and extracts the face image 702 of the person from the received image (step ST40). In step ST40, the face image extracting unit 130 may receive the whole-body image extracted by the whole-body image extracting unit 120.

The face image extracting unit 130 outputs the face image 702 to the face image feature amount extracting unit 150.

The face image feature amount extracting unit 150 extracts the face image feature amount (step ST50).

The face image feature amount extracting unit 150 extracts the face image feature amount from the face image extracted by the face image extracting unit 130.

Specifically, the face image feature amount extracting unit 150 extracts the face image feature amount from the face image of the camera image acquired by the camera image acquiring unit 110, and outputs the face image feature amount to the person feature storing unit 160. The face image feature amount extracting unit 150, when receiving the face image, extracts the face image feature amount (Y1) and outputs the face image feature amount to the person feature storing unit 160.

The person feature storing unit 160 stores the feature amounts of the whole-body image and the face image as a pair in the database 200 (step ST60).

Specifically, the person feature storing unit 160 acquires the whole-body image feature amount and the face image feature amount of an image photographed for each camera and the photographing information of the image, and stores, in the database 200, the set information in which the acquired whole-body image feature amount, face image feature amount, and photographing information are associated with each other.

When the set information is stored in the database 200, the processing waits until the start of the next processing.

Next, the person retrieval processing will be described.

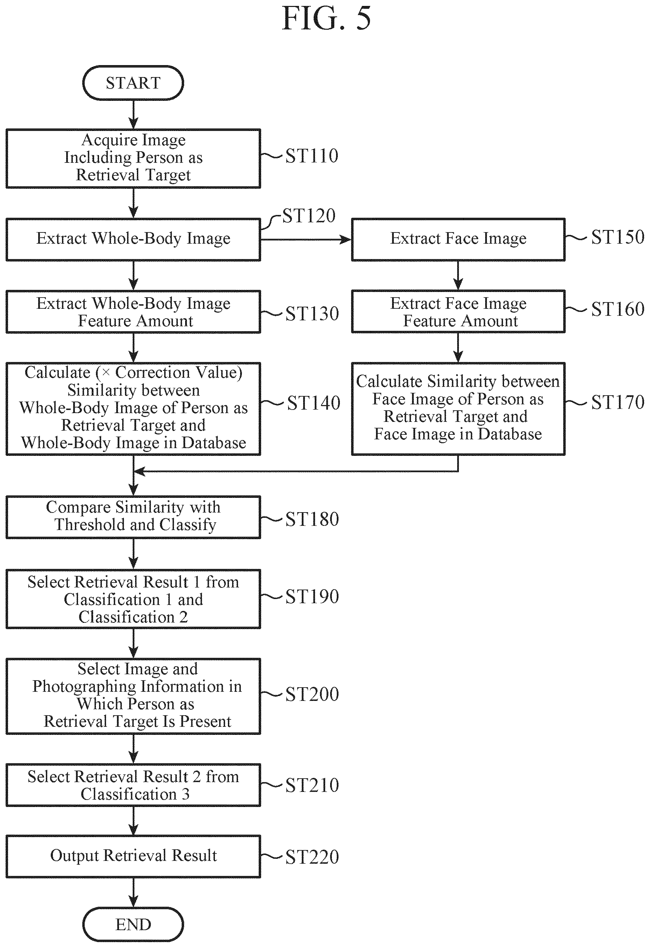

FIG. 5 is a flowchart illustrating person retrieval processing in the person retrieval device 100 according to the first embodiment of the present invention.

The person retrieval device 100 starts processing, for example, when a control unit (not illustrated) receives an instruction to start processing.

The person retrieval unit 190 receives a retrieval request from the monitoring terminal 300 and acquires a specific person image including a person as a retrieval target (step ST 110).

The person retrieval unit 190 outputs the specific person image to the whole-body image extracting unit 120 and the face image extracting unit 130.

For example, the whole-body image extracting unit 120 receives the specific person image from the monitoring terminal 300 and extracts the whole-body image 701 of the person from the received specific person image (step ST120).

The whole-body image feature amount extracting unit 140 extracts the whole-body image feature amount (step ST130).

Specifically, the whole-body image feature amount extracting unit 140, when receiving the whole-body image of the specific person image, extracts the whole-body image feature amount (X1) and outputs the whole-body image feature amount of the specific person image to the similarity calculating unit 170.

The similarity calculating unit 170 calculates the similarity between the whole-body image of the person as the retrieval target and the whole-body image in the database 200 (step ST140).

Specifically, the similarity calculating unit 170, when acquiring the whole-body image feature amount of the person in the specific person image in which the person as the retrieval target is indicated, refers to the database 200 and calculates the first similarity indicating the similarity between the whole-body image feature amount of the specific person image and the whole-body image feature amount stored in the database 200.

At this time, the similarity calculating unit 170 refers to the correction value for each camera in the database 200, and corrects (× correction value) the first similarity by multiplying the first similarity by the correction value. Note that the correction may be performed on the whole-body image feature amount described above.

For example, the face image extracting unit 130 receives the specific person image from the monitoring terminal 300 and extracts the face image 702 of the person from the received specific person image (step ST150).

The face image feature amount extracting unit 150 extracts the face image feature amount (step ST160).

Specifically, the face image feature amount extracting unit 150 extracts the face image feature amount from the face image of the specific person image and outputs the face image feature amount to the similarity calculating unit 170. In this case, the face image feature amount extracting unit 150, when receiving the face image, extracts the face image feature amount (Y1), for example, and outputs the face image feature amount of the specific person image to the similarity calculating unit 170.

The similarity calculating unit 170 calculates the similarity between the face image of the person as the retrieval target and the face image in the database 200 (step ST170).

Specifically, the similarity calculating unit 170, when acquiring the whole-body image feature amount and the face image feature amount of the person in the specific person image in which the person as the retrieval target is indicated, refers to the database 200 and calculates the second similarity indicating the similarity between the face image feature amount of the specific person image and the face image feature amount stored in the database 200. The similarity calculating unit 170 outputs the set information used for the calculation to the classification unit 180 together with the first similarity and the second similarity.

The classification unit 180 compares the similarity with a threshold and classifies the similarity (step ST180).

Specifically, the classification unit 180 determines whether the first similarity exceeds the first threshold and determines whether the second similarity exceeds the second threshold.

The classification unit 180 classifies the set of the whole-body image feature amount, the face image feature amount, the photographing information, and the thumbnail image using the determination result, and outputs the set information (set information) together with the classification information indicating the Classifications 1 to 4 depending on the classification result.

The person retrieval unit 190 selects a retrieval result 1 from the Classification 1 and the Classification 2 by using the determination result of the classification unit 180 (step ST190).

The person retrieval unit 190 selects an image in which a person as a retrieval target is present and photographing information (step ST200).

Specifically, the person retrieval unit 190 acquires the photographing information associated with the face image feature amount in which the second similarity exceeds the second threshold from the database 200, calculates the area and the time period in which the person indicated in the specific person image is likely to be photographed using the acquired photographing information, and generates the specific person photographing information including the camera identification information in the area and the time period.

As a result, a camera and a time period in which the person as the retrieval target is likely to be present are narrowed down.

The person retrieval unit 190 further selects, from the Classification 3, a retrieval result 2 that satisfies the conditions of the camera and the time period in which the person as the retrieval target is likely to be present (step ST210).

The person retrieval unit 190 outputs the retrieval result (step ST220).

Specifically, the person retrieval unit 190 generates the specific person photographing information including the camera identification information and the time period by using the set information of the Classification 1 and the Classification 2 and the set information of the selected Classification 3. The person retrieval unit 190 outputs the specific person photographing information as a retrieval result.

Here, more detailed processing of step ST180 will be described.

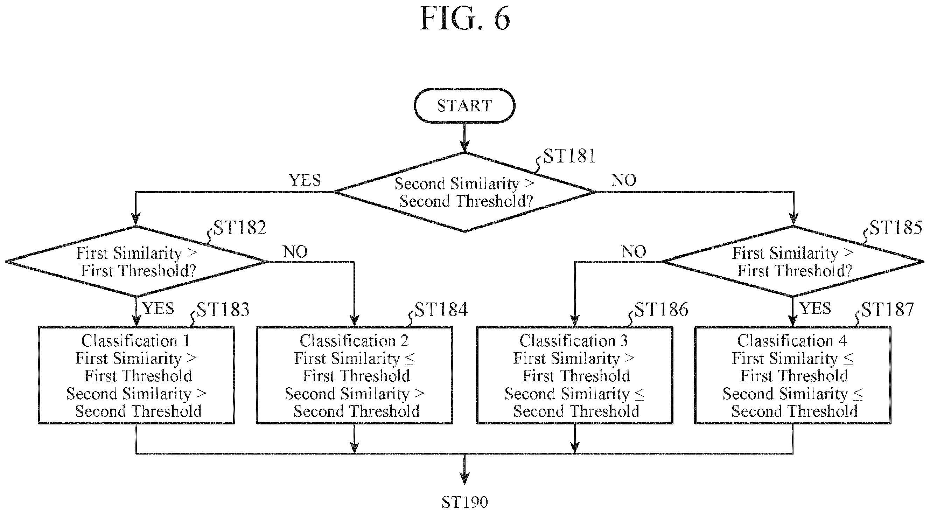

FIG. 6 is a flowchart illustrating detailed processing in ST180 in FIG. 5.

For example, when the similarity calculating unit 170 calculates the first similarity and the second similarity, the classification unit 180 starts the processing.

The classification unit 180 determines whether the second similarity exceeds the second threshold (second similarity > second threshold?) (step ST181).

If the second similarity exceeds the second threshold in step ST 181 (step ST 181 "YES"), the classification unit 180 determines whether the first similarity exceeds the first threshold (first similarity > first threshold?) (step ST182).

In step ST 182, if the first similarity exceeds the first threshold (step ST182 "YES"), the classification unit 180 classifies the set information into Classification 1 (step ST183).

In step ST 182, if the first similarity does not exceed the first threshold (step ST182 "NO"), the classification unit 180 classifies the set information into Classification 2 (step ST184).

In step ST181, if the second similarity does not exceed the second threshold (step ST181 "NO"), the classification unit 180 determines whether the first similarity exceeds the first threshold (first similarity > first threshold?) (step ST185).

In step ST185, if the first similarity exceeds the first threshold (step ST185 "YES"), the classification unit 180 classifies the set information into Classification 3 (step ST186).

In step ST 185, if the first similarity does not exceed the first threshold (step ST185 "NO"), the classification unit 180 classifies the set information into Classification 4 (step ST187).

As described above, it is possible to retrieve an image in an area and a time period in which an image having a face feature similar to the face feature of the person indicated in the specific person image is photographed. Then, after the guarantee of the same person is obtained by the face authentication using the universal feature amount, a camera and a time period in which the same person is likely to be present are narrowed down from the information such as the date and time, the camera position, the camera adjacency relation, and the relative distance of the retrieved camera image, then person identification based on the similarity of the whole-body image feature amount is performed, and thereby the effects of speeding up and high accuracy of the person retrieval of the specific person can be obtained.

Here, a modification of the person retrieval device of the present invention will be described.

In the present invention, the person retrieval device 100 and the person retrieval system 1 illustrated in FIG. 2 may be configured to perform load distribution for the purpose of reducing the load on the person retrieval device 100.

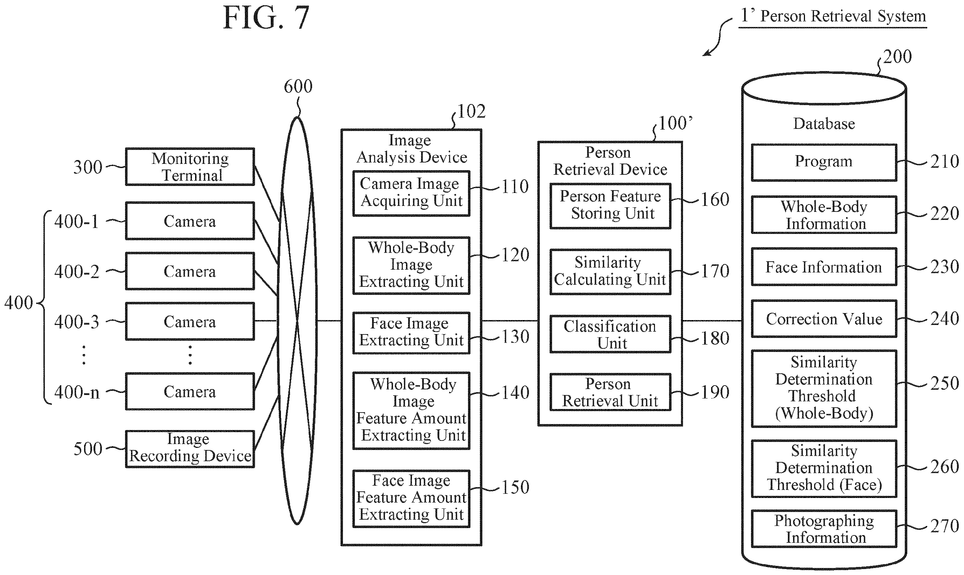

FIG. 7 is a diagram illustrating a first modification of the configuration of the person retrieval system 1" including the person retrieval device 100' according to the first embodiment of the present invention.

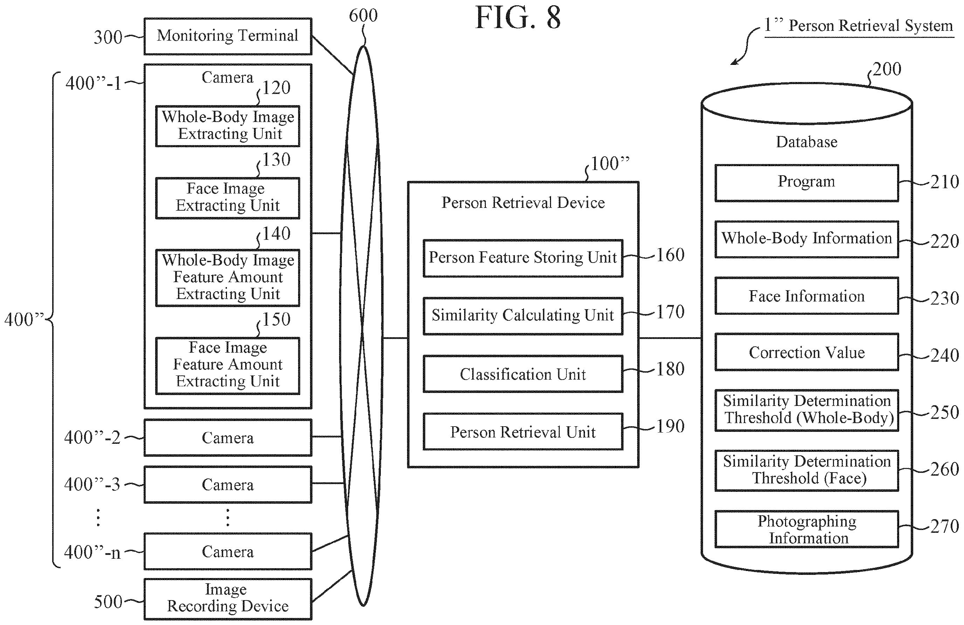

FIG. 8 is a diagram illustrating a second modification of the configuration of the person retrieval system 1"" including the person retrieval device 100" according to the first embodiment of the present invention.

A person retrieval system 1' illustrated in FIG. 7 is obtained by utilizing a camera image acquiring unit 110, a whole-body image extracting unit 120, a face image extracting unit 130, a whole-body image feature amount extracting unit 140, and a face image feature amount extracting unit 150 of the person retrieval device 100 illustrated in FIG. 2 and modifying them into an image analysis device 102.

According to the person retrieval device 100' illustrated in FIG. 7, since the distribution of the processing load of the person retrieval device 100' and the input to the person retrieval device 100' become the whole-body image, the face image, the whole-body image feature amount, and the face image feature amount from the video stream of the camera, the effect of reducing the transmission band can be expected.

The person retrieval system 1" illustrated in FIG. 8 is modified to a configuration in which the functions of the camera image acquiring unit 110, the whole-body image extracting unit 120, the face image extracting unit 130, the whole-body image feature amount extracting unit 140, and the face image feature amount extracting unit 150 of the person retrieval device 100 illustrated in FIG. 2 are utilized in the camera 400".

As a result, the processing load is distributed, and the person retrieval device 100" can be implemented by an inexpensive CPU. In addition, the transmission band can be suppressed.

Although FIGS. 7 and 8 illustrate that the person retrieval device 100', 100" includes the person feature storing unit 160, it is also possible to implement the person feature storing unit 160 as an external configuration of the person retrieval device.

As described above, a person retrieval device according to the present invention is a person retrieval device that retrieves an image including a person as a retrieval target from among a plurality of images photographed by a plurality of cameras, the person retrieval device including: a similarity calculating unit to refer to, when acquiring a whole-body image feature amount and a face image feature amount of a person in a specific person image in which a person as a retrieval target is indicated, a database that stores a whole-body image feature amount, a face image feature amount, and photographing information including camera identification information, a photographing position, and a photographing date and time in association with each other for each of images output from the plurality of cameras, calculate a first similarity indicating a similarity between the whole-body image feature amount of the specific person image and the whole-body image feature amount in the database, and calculate a second similarity indicating a similarity between the face image feature amount of the specific person image and the face image feature amount in the database; a classification unit to determine whether the first similarity exceeds a first threshold and determines whether the second similarity exceeds a second threshold; and a person retrieval unit to acquire photographing information associated with a face image feature amount in which the second similarity exceeds the second threshold from the database by using a determination result of the classification unit, calculate an area and a time period in which a person indicated in the specific person image is likely to be photographed by using the acquired photographing information, and generate specific person photographing information including camera identification information in the area and the time period.

As a result, it is possible to provide a person retrieval device that retrieves an image including a specific person from among images photographed by a plurality of cameras with high accuracy.

The person retrieval device according to the present invention is further configured so that the person retrieval unit outputs the specific person photographing information and the image photographed by the camera indicated in the camera identification information of the specific person photographing information to the monitoring terminal requesting the retrieval.

As a result, it is possible to provide a person retrieval device that presents a retrieval result including an image in the retrieval result.

The person retrieval device according to the present invention further includes a person feature storing unit to acquire a whole-body image feature amount and a face image feature amount of an image photographed for each camera and photographing information of the image, and store the acquired whole-body image feature amount, face image feature amount, and photographing information in a database in association with each other.

Accordingly, it is possible to provide the person retrieval device that adds and updates the data of the database.

The person retrieval device according to the present invention further includes a whole-body image extracting unit to extract a whole-body image from the received image, a face image extracting unit to extract a face image from the received image, a whole-body image feature calculating unit to extract a whole-body image feature amount from the whole-body image extracted by the whole-body image extracting unit, and a face image feature calculating unit to extract a face image feature amount from the face image extracted by the face image extracting unit, in which the similarity calculating unit acquires the whole-body image feature amount from the whole-body image feature calculating unit and acquires the face image feature amount from the face image feature calculating unit.

As a result, it is possible to provide a person retrieval device that receives a retrieval request based on a specific person image.

The person retrieval device according to the present invention further includes: a camera image acquiring unit to acquire images photographed by a plurality of cameras and photographing information; and a person feature storing unit to acquire a whole-body image feature amount and a face image feature amount of an image photographed for each camera and photographing information of the image, and store, in a database, the acquired whole-body image feature amount, the face image feature amount, and the photographing information in association with each other, in which the whole-body image extracting unit extracts a whole-body image from the image acquired by the camera image acquiring unit, the face image extracting unit extracts a face image from the image acquired by the camera image acquiring unit, the whole-body image feature calculating unit extracts a whole-body image feature amount from the whole-body image of the image acquired by the camera image acquiring unit, and outputs the whole-body image feature amount to the person feature storing unit, and the face image feature calculating unit extracts a face image feature amount from the face image of the image acquired by the camera image acquiring unit, and outputs the face image feature amount to the person feature storing unit.

As a result, it is possible to provide a person retrieval device that acquires the image from the camera and adds and updates the data of the database.

The person retrieval device according to the present invention is further configured so that the person retrieval unit, in a case where a plurality of pieces of camera identification information indicating the same camera are included in generating the specific person photographing information, thins out the camera identification information indicating the same camera at predetermined time intervals.

As a result, it is possible to provide a person retrieval device that outputs a retrieval result that is hardly biased to a specific camera or a time period.

A person retrieval system according to the present invention is a person retrieval system including a person retrieval device that retrieves an image including a person as a retrieval target from among a plurality of images photographed by a plurality of cameras in accordance with a retrieval request from a monitoring terminal, in which the monitoring terminal, the plurality of cameras, and the person retrieval device are provided, and the person retrieval device includes: a similarity calculating unit to refer to, when acquiring a whole-body image feature amount and a face image feature amount of a person in a specific person image in which a person as a retrieval target is indicated, a database that stores a whole-body image feature amount, a face image feature amount, and photographing information including camera identification information, a photographing position, and a photographing date and time in association with each other for each of images output from the plurality of cameras, calculate a first similarity indicating a similarity between the whole-body image feature amount of the specific person image and the whole-body image feature amount in the database, and calculate a second similarity indicating a similarity between the face image feature amount of the specific person image and the face image feature amount in the database; a classification unit to determine whether the first similarity exceeds a first threshold and determine whether the second similarity exceeds a second threshold; and a person retrieval unit to acquire photographing information associated with a face image feature amount in which the second similarity exceeds a second threshold from the database by using a determination result of the classification unit, calculate an area and a time period in which a person shown in the specific person image is likely to be photographed by using the acquired photographing information, and generate specific person photographing information including camera identification information in the area and the time period.

As a result, it is possible to provide a person retrieval system that retrieves an image including a specific person from among images photographed by a plurality of cameras with high accuracy.

A person retrieval program according to the present invention is a person retrieval program for causing a computer to operate as a person retrieval device that retrieves an image including a person as a retrieval target from among a plurality of images photographed by a plurality of cameras, the person retrieval program causing the computer to operate as: a similarity calculating unit to refer to, when acquiring a whole-body image feature amount and a face image feature amount of a person in a specific person image in which a person as a retrieval target is indicated, a database that stores a whole-body image feature amount, a face image feature amount, and photographing information including camera identification information, a photographing position, and a photographing date and time in association with each other for each of images output from the plurality of cameras, calculate a first similarity indicating a similarity between the whole-body image feature amount of the specific person image and the whole-body image feature amount in the database, and calculate a second similarity indicating a similarity between the face image feature amount of the specific person image and the face image feature amount in the database; a classification unit to determine whether the first similarity exceeds a first threshold and determine whether the second similarity exceeds a second threshold; and a person retrieval unit to acquire photographing information associated with a face image feature amount in which the second similarity exceeds a second threshold from the database by using a determination result of the classification unit, calculate an area and a time period in which a person shown in the specific person image is likely to be photographed by using the acquired photographing information, and generate specific person photographing information including camera identification information in the area and the time period.

As a result, it is possible to provide a person retrieval program for retrieving an image including a specific person from among images photographed by a plurality of cameras with high accuracy.

### Second Embodiment.

A second embodiment illustrates a mode in which the accuracy of person retrieval is further improved by adjusting the difference in the whole-body image feature amount caused by the difference in appearance or the difference in clothing due to the installation position, the angle of view, the external light difference, and the like of the monitoring camera in the first embodiment.

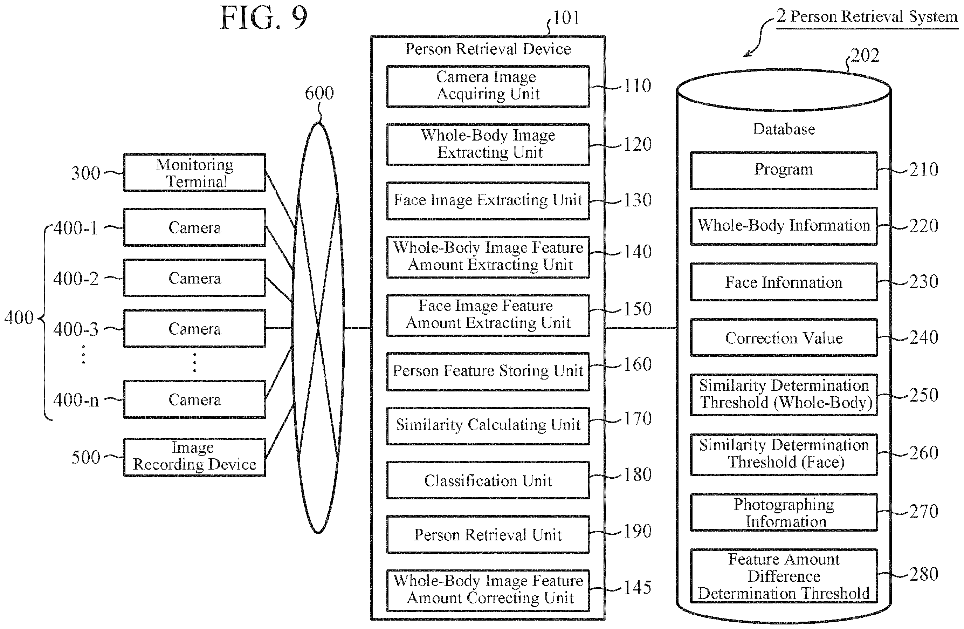

FIG. 9 is a diagram illustrating a configuration of a person retrieval system 2 including a person retrieval device 101 according to the second embodiment of the present invention.

The person retrieval system 2 illustrated in FIG. 9 is different in that the person retrieval device 100 illustrated in the first embodiment is changed to the person retrieval device 101. Specifically, it is different in that a whole-body image feature amount correcting unit 145 is provided.

In addition, the person retrieval system 2 illustrated in FIG. 9 is different in that the database 200 illustrated in the first embodiment is changed to a database 202. Specifically, the database 202 is different in including a feature amount difference determination threshold (third threshold) 280.

Therefore, in the following description, the whole-body image feature amount correcting unit 145 and the database 202 in the person retrieval system 2 will be described, and the content already described will be appropriately omitted.

The person retrieval device 101 in the person retrieval system 2 includes a camera image acquiring unit 110, a whole-body image extracting unit 120, a face image extracting unit 130, a whole-body image feature amount extracting unit 140, a face image feature amount extracting unit 150, a person feature storing unit 160, a similarity calculating unit 170, a classification unit 180, a person retrieval unit 190, a whole-body image feature amount correcting unit 145, a control unit (not illustrated), and the like.

When the whole-body image feature amount extracting unit 140 calculates the whole-body image feature amount, the whole-body image feature amount correcting unit 145 corrects the correction value 240 by using the whole-body image feature amount associated with the face image feature amount in which the second similarity exceeds the second threshold with respect to the correction value 240 for correcting the whole-body image feature amount.

Specifically, the whole-body image feature amount correcting unit 145 acquires the set information to which the classification information indicating the Classification 1 and the Classification 2 is assigned in the set information output by the classification unit 180.

For example, the whole-body image feature amount correcting unit 145 performs weighting so that other whole-body image feature amounts or the similarities are similar on the basis of a result in which the similarity of the whole-body image feature amounts of the Classifications 1 and 2 is the highest, and calculates a correction value for each of the cameras 400 (400-1,400-2,400-3,..., 400-n). The whole-body image feature amount correcting unit 145 performs statistical processing on a plurality of times of the calculation results, determines the correction value for each of the cameras 400 (400-1,400-2,400-3,..., 400-n), and updates the correction value 240 stored in the database 202.

The statistical processing may be set to perform statistical processing of deriving a likely correction value from a plurality of times of the calculation results, for example, calculating an average value of a plurality of correction values.

Processing in the case of having this function will be described.

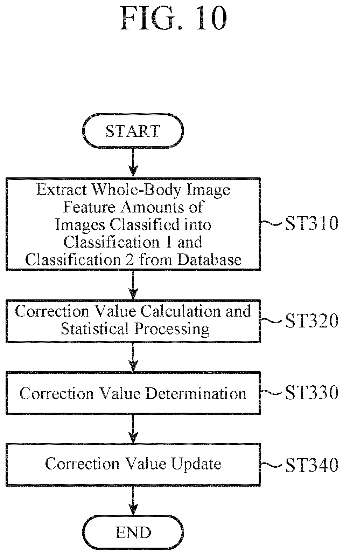

FIG. 10 is a flowchart illustrating correction value update processing in the person retrieval device 101 according to the second embodiment of the present invention.

For example, when step ST210 in FIG. 5 ends, the person retrieval device 101 of the second embodiment proceeds to step ST310.

The whole-body image feature amount correcting unit 145 extracts the whole-body image feature amounts of the images classified into Classification 1 and Classification 2 from the database 202 (step ST310).

The whole-body image feature amount correcting unit 145 calculates a correction value using the whole-body image feature amount and performs statistical processing on the plurality of times of calculation results (step ST320).

The whole-body image feature amount correcting unit 145 determines the correction value on the basis of the result of the statistical processing (step ST330).

The whole-body image feature amount correcting unit 145 updates the correction value (step ST340).

As a result, it is possible to improve the accuracy of the person identification by the whole-body image by correcting the variation in the whole-body image feature amount due to the angle of view or the external light change for each of the cameras 400 (400-1,400-2,400-3,..., 400-n) in cooperation with the face authentication.

Hereinafter, the description returns to the configuration of the person retrieval system 2 including the person retrieval device 101 according to the second embodiment.

The database 202 further includes the feature amount difference determination threshold (third threshold) 280 in addition to the program 210, the whole-body information 220, the face information 230, the correction value 240, the whole-body similarity determination threshold (first threshold) 250, the face similarity determination threshold (second threshold) 260, and the photographing information 270.

The feature amount difference determination threshold (third threshold) 280 is used to determine whether the difference in the whole-body image feature amount is a difference in appearance or a difference in clothing due to a difference in a camera for photographing or the like in a case where the similarity of the face image is high and there is a high possibility that the person is the same person as the person of the specific person image.

When the difference value between the whole-body image feature amount associated with the face image feature amount in which the second similarity exceeds the second threshold and the whole-body image feature amount of the specific person image exceeds the feature amount difference determination threshold (third threshold) 280, the whole-body image feature amount correcting unit 145 further replaces the whole-body image feature amount of the specific person image with the whole-body image feature amount associated with the face image feature amount in which the second similarity exceeds the second threshold.

Specifically, the whole-body image feature amount correcting unit 145 acquires the set information to which the classification information indicating the Classification 2 is assigned in the set information output by the classification unit 180.

The whole-body image feature amount correcting unit 145 determines whether a difference value between the whole-body image feature amount of the set information and the whole-body image feature amount of the specific person image in the set information of the Classification 2 exceeds a whole-body feature amount difference determination threshold (third threshold).

In a case where the difference value exceeds the third threshold, the whole-body image feature amount correcting unit 145 replaces the whole-body image feature amount of the specific person image used for calculating the difference value with the whole-body image feature amount associated with the face image feature amount in which the second similarity exceeds the second threshold in the database 202, and sets the same as the second whole-body image feature amount of the specific person image.

As a result, the similarity calculating unit 170 calculates the similarity (third similarity) between the second whole-body image feature amount of the specific person image and the whole-body image feature amount in the database 202. The classification unit 180 determines whether the third similarity exceeds the first threshold and classifies the set information. The person retrieval unit 190 selects set information having the whole-body image feature amount in which the third similarity exceeds the first threshold from the database 202 and outputs the set information as a retrieval result.

Processing in the case of having this function will be described.

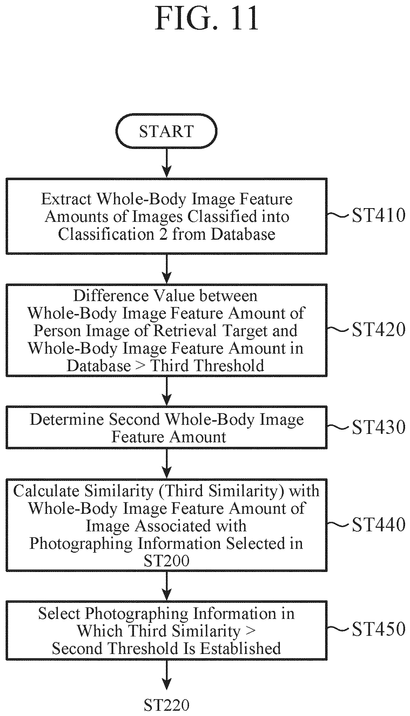

FIG. 11 is a flowchart illustrating processing of extracting an image using the whole-body image feature amount in the person retrieval device 101 according to the second embodiment of the present invention.

For example, when step ST210 in FIG. 5 ends, the person retrieval device 101 of the second embodiment proceeds to step ST410.

The whole-body image feature amount correcting unit 145 extracts the whole-body image feature amount of the image classified into Classification 2 from the database 202 (step ST410).

The whole-body image feature amount correcting unit 145 determines whether a difference value between the whole-body image feature amount of the person image (specific person image) as the retrieval target and the whole-body image feature amount in the database 202 exceeds the third threshold (difference value > third threshold) (step ST420).

The whole-body image feature amount correcting unit 145 determines the second whole-body image feature amount (step ST430). The whole-body image feature amount correcting unit 145 outputs the second whole-body image feature amount to the similarity calculating unit 170.

The similarity calculating unit 170 calculates the similarity (third similarity) between the second whole-body image feature amount of the specific person image and the whole-body image feature amount associated with the photographing information selected in step ST200. The similarity calculating unit 170 outputs the set information used for the calculation to the classification unit 180 together with the third similarity.

The classification unit 180 determines whether the third similarity exceeds the first threshold, and classifies the set information using the determination result as in the first embodiment. The classification unit 180 performs classification using the third similarity instead of the first similarity described in the first embodiment.

The person retrieval unit selects set information in which the third similarity exceeds the first threshold as a retrieval result 3 from the set information of the Classification 2 (step ST450).

When the processing of step ST450 ends, the processing proceeds to step ST220 in the person retrieval device 101.

In step ST220, the person retrieval unit 190 outputs a retrieval result including the retrieval result 3.

As a result, the whole-body image feature amount of the specific person is updated every time by following a large change in the whole-body image feature amount due to the difference in clothing of the same person or the like and in cooperation with the face authentication, so that the accuracy of the person identification by the whole-body image can be improved.

As described above, after the guarantee of the same person is obtained from the similarity of the face image feature amount, which is the universal feature amount, it is possible to cope with the correction of the variation in the whole-body image feature amount due to the camera angle of view and the external light change and the change in the feature amount due to the clothing difference, and thus, it is possible to improve the accuracy of the person identification by the whole-body image between the cameras.

The person retrieval device according to the present invention is further configured so that the whole-body image feature amount extracting unit, when receiving an image acquired by the camera image acquiring unit, calculates the whole-body image feature amount corrected by using a correction amount for each camera indicated by the camera identification information, and the person retrieval device further includes a whole-body image feature amount correcting unit to correct a correction amount used for the whole-body image feature amount extracting unit by using a whole-body image feature amount associated with a face image feature amount in which the second similarity exceeds the second threshold.

As a result, it is possible to provide a person retrieval device that further improves the accuracy of person identification by the whole-body image between the cameras.

The person retrieval device according to the present invention is configured to further include a whole-body image feature amount correcting unit to replace the whole-body image feature amount of the specific person image with the whole-body image feature amount associated with the face image feature amount in which the second similarity exceeds the second threshold in a case where a difference value between the whole-body image feature amount associated with the face image feature amount in which the second similarity exceeds the second threshold and the whole-body image feature amount of the specific person image exceeds a third threshold.

As a result, it is possible to provide a person retrieval device that further improves the accuracy of person identification by the whole-body image between the cameras.

### Third Embodiment.

A third embodiment is a mode including a configuration for adjusting the first threshold and the second threshold used in the first embodiment or the second embodiment.

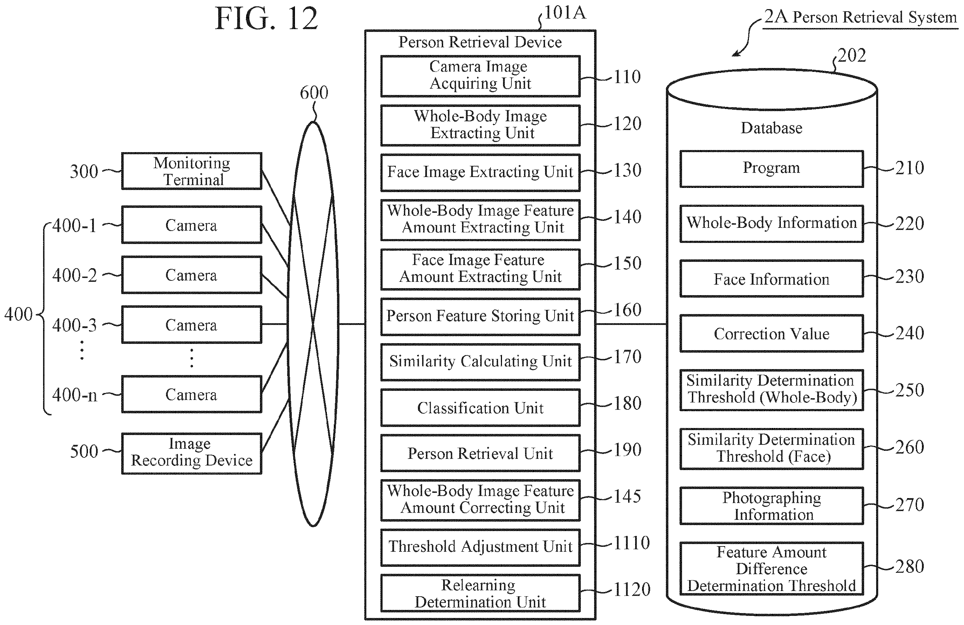

FIG. 12 is a diagram illustrating a configuration of a person retrieval system 2A including a person retrieval device 101A according to the third embodiment of the present invention.

The person retrieval system 2A illustrated in FIG. 12 has a configuration different from the configuration described above in that the person retrieval device 101 in the person retrieval system 2 illustrated in FIG. 9 is changed to a person retrieval device 101A. Specifically, the person retrieval device 101A is different in further including a threshold adjusting unit 1110 and a relearning determination unit 1120.

Therefore, in the following description, description related to the threshold adjusting unit 1110 and the relearning determination unit 1120 in the person retrieval system 2A will be mainly described, and description overlapping with the content already described will be appropriately omitted.

The person retrieval device 101A in the person retrieval system 2A includes a camera image acquiring unit 110, a whole-body image extracting unit 120, a face image extracting unit 130, a whole-body image feature amount extracting unit 140, a face image feature amount extracting unit 150, a person feature storing unit 160, a similarity calculating unit 170, a classification unit 180, a person retrieval unit 190, a whole-body image feature amount correcting unit 145, a threshold adjusting unit 1110, a relearning determination unit 1120, a control unit (not illustrated), and the like.

The threshold adjusting unit 1110 implements a threshold setting function for automatically adjusting the first threshold and the second threshold.

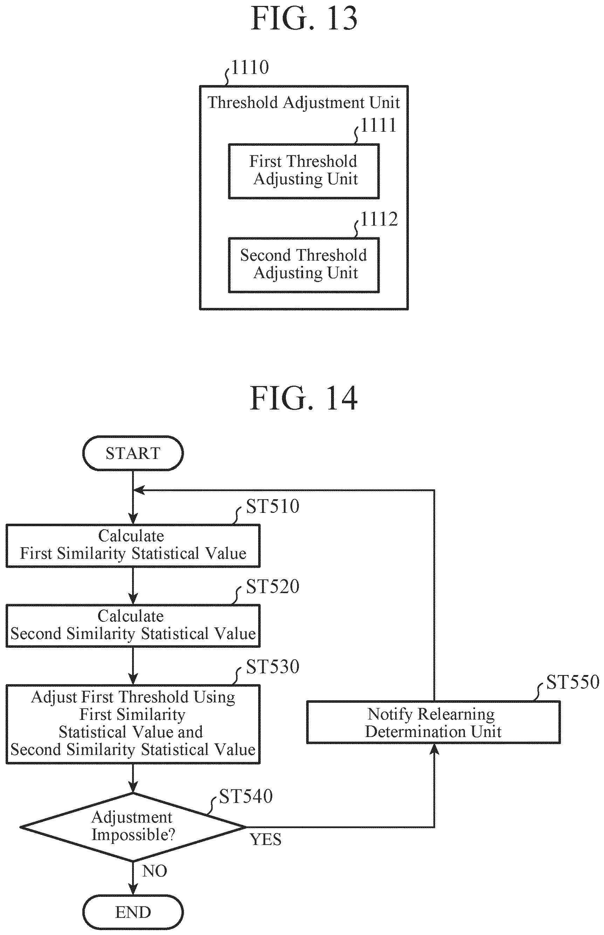

FIG. 13 is a diagram showing a configuration of the threshold adjusting unit 1110 in the present invention.

The threshold adjusting unit 1110 in FIG. 13 includes a first threshold adjusting unit 1111 and a second threshold adjusting unit 1112.

The first threshold adjusting unit 1111 adjusts and sets the first threshold.

Specifically, the first threshold adjusting unit 1111 adjusts and sets the first threshold using the first similarity accumulated on the basis of the result determined in advance by the classification unit 180 and the similarity calculated on the basis of the whole-body image feature amount of each of the different persons (the whole-body feature similarity between the different persons).

More specifically, the first threshold adjusting unit 1111 first calculates a first similarity statistical value that is a statistical value of the first similarity. The first threshold adjusting unit 1111 accumulates the similarity (first similarity) of the whole-body image of the person classified as "(Classification 2)" in which only the similarity of the face image exceeds the threshold on the basis of the determination result by the classification unit 180. Subsequently, the first threshold adjusting unit calculates a first similarity statistical value using the accumulated first similarity. The first similarity statistical value is, for example, an average value of the first similarity or a weighted average value of the first similarity. In addition, the first similarity statistical value may be all of the accumulated first similarities, or may be a part of the accumulated first similarities.

Next, the first threshold adjusting unit 1111 calculates a second similarity statistical value that is a statistical value of the whole-body feature similarity between different persons. For example, the first threshold adjusting unit 1111 determines that persons photographed by different cameras at the same time are different persons, calculates the whole-body feature similarity on the basis of the whole-body image feature amount of each of the different persons, and accumulates the whole-body feature similarity between the different persons. The first threshold adjusting unit 1111 calculates the second similarity statistical value using the accumulated whole-body feature similarity between different persons. The second similarity statistical value is, for example, an average value of the whole-body feature similarity between different persons or a weighted average value of the whole-body feature similarity between different persons. In addition, the second similarity statistical value may be all the accumulated whole-body feature similarities between different persons, or may be a part of the accumulated whole-body feature similarities between different persons.

Next, the first threshold adjusting unit 1111 adjusts and sets the first threshold using the first similarity statistical value and the second similarity statistical value. For example, the first threshold adjusting unit 1111 adjusts and sets the first threshold so that a relationship of second similarity statistical value < first threshold < first similarity statistical value is established. This is based on the idea of making the first threshold larger than the second similarity statistical value since the second similarity statistical value is considered to be a statistical value of the whole-body feature similarity between different persons. In addition, since the first similarity statistical value is considered to be a statistical value of the similarity of the same person, it is based on the idea of making the first threshold smaller than the first similarity statistical value.

With the above configuration, the first threshold can be automatically adjusted and set.

The second threshold adjusting unit 1112 adjusts and sets the second threshold using the similarity (face feature similarity between different persons) calculated on the basis of the face image feature amount of each of the different persons.

Specifically, the second threshold adjusting unit 1112 calculates a third similarity statistical value that is a statistical value of the face feature similarity between different persons. For example, the second threshold adjusting unit 1112 determines that persons photographed by different cameras at the same time are different persons, calculates the face feature similarity on the basis of the face image feature amount of each of the different persons, and accumulates the face feature similarity between the different persons. The second threshold adjusting unit 1112 calculates the third similarity statistical value using the accumulated face feature similarity between different persons. The third similarity statistical value is, for example, an average value of face feature similarity between different persons or a weighted average value of face feature similarity between different persons. In addition, the third similarity statistical value may be all the accumulated face feature similarities between different persons, or may be a part of the accumulated face feature similarities between different persons.

Next, the second threshold adjusting unit 1112 adjusts and sets the second threshold using the third similarity statistical value. The second threshold adjusting unit 1112 adjusts and sets the second threshold so that, for example, a relationship of third similarity statistical value < second threshold is established. This is based on the idea of making the second threshold larger than the third similarity statistical value since the third similarity statistical value is considered to be a statistical value of the face feature similarity between different persons.

With the above configuration, the second threshold can be automatically adjusted and set.

Note that the threshold adjustment processing (first threshold adjustment processing and second threshold adjustment processing) may be performed by the threshold adjusting unit 1110 at any timing. For example, the processing may be performed when the person retrieval system is installed, or may be performed when the person retrieval system is operated. In addition, in a case where the processing is performed at the time of operating the person retrieval system, the processing may be performed every predetermined constant period, or may be performed by being appropriately instructed.

In a case where the first threshold cannot be adjusted and set by the threshold adjusting unit 1110, the relearning determination unit 1120 instructs the whole-body image feature amount extracting unit 140 to execute learning processing for extracting the whole-body image feature amount from the whole-body image.

Specifically, the relearning determination unit 1120, when receiving a notification that the first threshold cannot be adjusted and set from the threshold adjusting unit 1110, determines that relearning of information (information used to extract a feature amount from an image) obtained in advance by learning processing (preliminary learning processing) in the whole-body image feature amount extracting unit 140 is necessary, and instructs the whole-body image feature amount extracting unit 140 to execute the learning processing.

The relearning determination unit 1120, when receiving the notification from the threshold adjusting unit 1110, may acquire the whole-body image used for calculating each similarity and accumulate the whole-body image in the database 200, for example. In this case, specifically, for example, the relearning determination unit 1120 accumulates the whole-body images in the first similarity relationship (the relationship in which only the similarity of the face images is classified as "(Classification 2)" exceeding the threshold) used for the first similarity statistical value so as to be distinguishable as the same person. As a result, a true value indicating the same person is assigned to a plurality of whole-body images to be distinguished as the same person. In addition, the relearning determination unit 1120 accumulates the whole-body images having the relationship of the whole-body feature similarity used for the second similarity statistical so as to be distinguishable as the different persons.

The whole-body image feature amount extracting unit 140 that has received the instruction from the relearning determination unit 1120 executes learning processing using the accumulated images.

By executing the learning processing, the whole-body image feature amount extracting unit 140 extracts the whole-body image feature amounts similar to each other when extracting each of the whole-body image feature amounts of persons who are highly likely to be the same person included in different images. Furthermore, the whole-body image feature amount extracting unit 140, when extracting each of the whole-body image feature amounts of persons who are highly likely to be different persons included in different images, extracts whole-body image feature amounts that are not similar to each other.

As a result, the whole-body image feature amount extracting unit 140 can extract the whole-body image feature amount with higher accuracy.

Here, an example of threshold adjustment processing according to the present invention will be described. Hereinafter, the first threshold adjustment processing and the second threshold adjustment processing will be described in this order.

FIG. 14 is a flowchart illustrating an example of first threshold adjustment processing in the present invention.

When the threshold adjusting unit 1110 starts the first threshold adjustment processing, the first threshold adjusting unit 1111 first calculates a first similarity statistical value (step ST510).

Specifically, the first threshold adjusting unit 1111 accumulates the similarity (first similarity) of the whole-body image of the person classified as "(Classification 2)" in which only the similarity of the face images exceeds the threshold on the basis of the determination result by the classification unit 180. At this time, the first similarity is accumulated in the database 200, for example. Subsequently, the first threshold adjusting unit 1111 calculates a first similarity statistical value using the accumulated first similarity.

Next, the first threshold adjusting unit 1111 calculates a second similarity statistical value (step ST520).

Specifically, for example, the first threshold adjusting unit 1111 determines that persons photographed by different cameras at the same time are different persons, calculates the whole-body feature similarity on the basis of the whole-body image feature amounts of the different persons, and accumulates the whole-body feature similarity between the different persons. At this time, the whole-body feature similarity between the different persons is accumulated in the database 200, for example. The first threshold adjusting unit 1111 calculates the second similarity statistical value using the accumulated whole-body feature similarity between different persons.

Next, the first threshold adjusting unit 1111 adjusts and sets the first threshold using the first similarity statistical value and the second similarity statistical value (step ST530).

Specifically, the first threshold adjusting unit 1111 adjusts and sets the first threshold so that a relationship of second similarity statistical value < first threshold < first similarity statistical value is established.

Next, the first threshold adjusting unit 1111 determines whether adjustment is impossible (step ST540).

Specifically, when the above relationship is not satisfied, for example, when the second similarity statistical value is larger than the first similarity statistical value, the first threshold adjusting unit 1111 determines that adjustment is impossible.

Next, the first threshold adjusting unit 1111, when determining that adjustment is impossible (step ST540 "YES"), notifies the relearning determination unit 1120 of the determination (step ST550).

The relearning determination unit 1120, when receiving the notification from the first threshold adjusting unit 1111, instructs the whole-body image feature amount extracting unit 140 to execute learning processing. The whole-body image feature amount extracting unit 140, when receiving an instruction to execute learning processing from the relearning determination unit 1120, executes learning processing.

After notifying the relearning determination unit 1120, the first threshold adjusting unit 1111 repeats the processing from step ST510.

Next, the first threshold adjusting unit 1111, when determining that adjustment is not impossible (step ST540 "NO"), ends the processing.

The second threshold adjustment processing will be described.

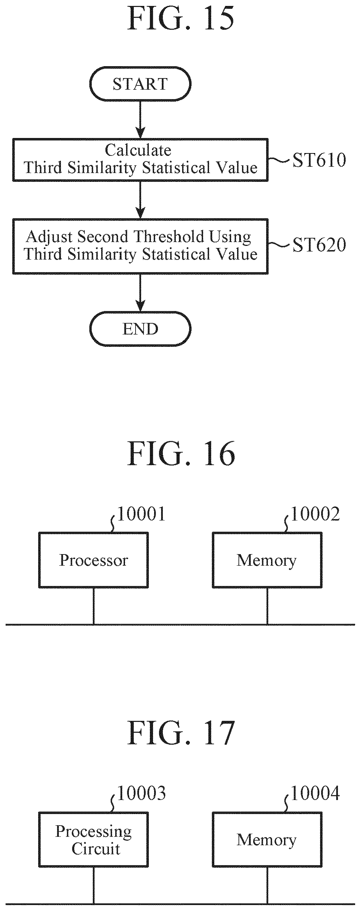

FIG. 15 is a flowchart illustrating an example of the second threshold adjustment processing in the present invention.

When the threshold adjusting unit 1110 starts the second threshold adjustment processing, the second threshold adjusting unit 1112 first calculates a third similarity statistical value (step ST610).

Specifically, for example, the second threshold adjusting unit 1112 determines that persons photographed by different cameras at the same time are different persons, calculates the face feature similarity on the basis of the face image feature amount of each of the different persons, and accumulates the face feature similarity between the different persons. At this time, the face feature similarity between the different persons is accumulated in the database 200, for example. The second threshold adjusting unit 1112 calculates the third similarity statistical value using the accumulated face feature similarity between different persons.

The second threshold adjusting unit 1112 adjusts and sets the second threshold using the third similarity statistical value (step ST620). Specifically, the second threshold adjusting unit 1112 adjusts and sets the second threshold so that, for example, a relationship of third similarity statistical value < second threshold is established.

After adjusting and setting the second threshold, the second threshold adjusting unit 1112 ends the processing.

In the person retrieval device according to the present invention, the threshold adjusting unit is configured to set the first threshold using the first similarity accumulated on the basis of a result determined in advance by the classification unit and the similarity calculated on the basis of the whole-body image feature amount of each of different persons.

As a result, it is possible to provide a person retrieval device capable of automatically setting the first threshold.

In the person retrieval device according to the present invention, the threshold adjusting unit is configured to set the second threshold using the similarity calculated on the basis of the face image feature amount of each of different persons.

As a result, it is possible to provide a person retrieval device capable of automatically setting the second threshold.

The person retrieval device according to the present invention is configured to further include a relearning determination unit to instruct the whole-body image feature amount extracting unit to execute learning processing of information used for extracting a whole-body image feature amount from the whole-body image in a case where the first threshold cannot be adjusted by the threshold adjusting unit.

As a result, it is possible to adjust the whole-body image feature amount extracted by the whole-body image feature amount extracting unit in a case where there is a possibility that the whole-body image feature amount extracted by the whole-body image feature amount extracting unit is not appropriate.

Here, a hardware configuration of the person retrieval device 100,101, 101A of the present invention will be described.

FIG. 16 is a diagram illustrating a first example of a hardware configuration of the person retrieval device 100,101,101A according to the present invention.

FIG. 17 is a diagram illustrating a second example of the hardware configuration of the person retrieval device 100,101, 101A according to the present invention.

The person retrieval device 100,101,101A according to the first embodiment (including modifications) or the second embodiment is implemented by hardware as illustrated in FIG. 16 or 17.

As illustrated in FIG. 16, the person retrieval device 100,101,101A includes a processor 10001 and a memory 10002.

The processor 10001 and the memory 10002 are mounted on a computer, for example.

The memory 10002 stores a program for causing the computer to function as the camera image acquiring unit 110, the whole-body image extracting unit 120, the face image extracting unit 130, the whole-body image feature amount extracting unit 140, the whole-body image feature amount correcting unit 145, the face image feature amount extracting unit 150, the person feature storing unit 160, the similarity calculating unit 170, the classification unit 180, the person retrieval unit 190, the threshold adjusting unit 1110, the first threshold adjusting unit 1111, the second threshold adjusting unit 1112, the relearning determination unit 1120, and the control unit (not illustrated). The processor 10001 reads and executes the program stored in the memory 10002, thereby implementing the functions of the camera image acquiring unit 110, the whole-body image extracting unit 120, the face image extracting unit 130, the whole-body image feature amount extracting unit 140, the face image feature amount extracting unit 150, the whole-body image feature amount correcting unit 145, the person feature storing unit 160, the similarity calculating unit 170, the classification unit 180, the person retrieval unit 190, the threshold adjusting unit 1110, the first threshold adjusting unit 1111, the second threshold adjusting unit 1112, the relearning determination unit 1120, and the control unit (not illustrated).

In addition, the database 200, 202 is implemented by the memory 10002 or another memory (not illustrated).

The processor 10001 uses, for example, a central processing unit (CPU), a graphics processing unit (GPU), a microprocessor, a microcontroller, a digital signal processor (DSP), or the like.

The memory 10002 may be a nonvolatile or volatile semiconductor memory such as a random access memory (RAM), a read only memory (ROM), an erasable programmable ROM (EPROM), an electrically erasable programmable read only memory (EEPROM), or a flash memory, may be a magnetic disk such as a hard disk or a flexible disk, may be an optical disk such as a compact disc (CD) or a digital versatile disc (DVD), or may be a magneto-optical disk.

Alternatively, the functions of the camera image acquiring unit 110, the whole-body image extracting unit 120, the face image extracting unit 130, the whole-body image feature amount extracting unit 140, the whole-body image feature amount correcting unit 145, the face image feature amount extracting unit 150, the person feature storing unit 160, the similarity calculating unit 170, the classification unit 180, the person retrieval unit 190, the threshold adjusting unit 1110, the first threshold adjusting unit 1111, the second threshold adjusting unit 1112, the relearning determination unit 1120, and the control unit (not illustrated) may be implemented by a dedicated processing circuit 10003 as illustrated in FIG. 17.

The processing circuit 10003 uses, for example, a single circuit, a composite circuit, a programmed processor, a parallel programmed processor, an application specific integrated circuit (ASIC), a programmable logic device (PLD), a field-programmable gate array (FPGA), a system-on-a-chip (SoC), a system large-scale integration (LSI), or the like.

Note that the functions of the camera image acquiring unit 110, the whole-body image extracting unit 120, the face image extracting unit 130, the whole-body image feature amount extracting unit 140, the whole-body image feature amount correcting unit 145, the face image feature amount extracting unit 150, the person feature storing unit 160, the similarity calculating unit 170, the classification unit 180, the person retrieval unit 190, the threshold adjusting unit 1110, the first threshold adjusting unit 1111, the second threshold adjusting unit 1112, the relearning determination unit 1120, and the control unit (not illustrated) may be implemented by different processing circuits 10003, or may be collectively implemented by the processing circuit 10003.

Alternatively, some of the functions of the camera image acquiring unit 110, the whole-body image extracting unit 120, the face image extracting unit 130, the whole-body image feature amount extracting unit 140, the whole-body image feature amount correcting unit 145, the face image feature amount extracting unit 150, the person feature storing unit 160, the similarity calculating unit 170, the classification unit 180, the person retrieval unit 190, the threshold adjusting unit 1110, the first threshold adjusting unit 1111, the second threshold adjusting unit 1112, the relearning determination unit 1120, and the control unit (not illustrated) may be implemented by the processor 10001 and the memory 10002, and the remaining functions may be implemented by the processing circuit 10003.

Note that the present invention can freely combine the respective embodiments, modify any component of the respective embodiments, or omit any component of the respective embodiments within the scope of the invention.

### LIST OF REFERENCE SIGNS

1, 1', 1", 2, 2A: person retrieval system
100, 100', 100", 101, 101A: person retrieval device
102: image analysis device
110: camera image acquiring unit
120: whole-body image extracting unit
130: face image extracting unit
140: whole-body image feature amount extracting unit
145: whole-body image feature amount correcting unit
150: face image feature amount extracting unit
160: person feature storing unit
170: similarity calculating unit
180: classification unit
190: person retrieval unit
200, 202: database
210: program
220: whole-body information
230: face information
240: correction value
250: similarity determination threshold (first threshold)
260: similarity determination threshold (second threshold)
270: photographing information
280: feature amount difference determination threshold (third threshold)
300: monitoring terminal
400, 400-1, 400-2, 400-3,...400-n, 400", 400"-1, 400"-2, 400"-3,..., 400"-n: camera
500: image recording device
600: communication network
700: image
701: whole-body image
702: face image
1110: threshold adjusting unit
1111: first threshold adjusting unit
1112: second threshold adjusting unit
1120: relearning determination unit
10001: processor
10002: memory
10003: processing circuit
10004: memory

## Claims

1. A person retrieval device that searches for an image including a person as a retrieval target from among a plurality of images photographed by a plurality of cameras, comprising:
a similarity calculating unit to refer to, when acquiring a whole-body image feature amount and a face image feature amount of a person in a specific person image in which the person as a retrieval target is indicated, a database that stores a whole-body image feature amount, a face image feature amount, and photographing information including camera identification information, a photographing position, and a photographing date and time in association with each other for each of images output from the plurality of cameras, calculate a first similarity indicating a similarity between the whole-body image feature amount of the specific person image and the whole-body image feature amount in the database, and calculate a second similarity indicating a similarity between the face image feature amount of the specific person image and the face image feature amount in the database;
a classification unit to determine whether the first similarity exceeds a first threshold and determines whether the second similarity exceeds a second threshold; and
a person retrieval unit to acquire, from the database, photographing information associated with a face image feature amount in which the second similarity exceeds the second threshold by using a determination result of the classification unit, calculate an area and a time period in which the person indicated in the specific person image is likely to be photographed by using the acquired photographing information, and generate specific person photographing information including camera identification information in the area and photographing date and time of the time period.

2. The person retrieval device according to claim 1,
wherein the person retrieval unit further outputs the specific person photographing information and an image photographed by a camera indicated by the camera identification information of the specific person photographing information to a monitoring terminal requesting retrieval.

3. The person retrieval device according to claim 1 or 2,
further comprising a person feature storing unit to acquire the whole-body image feature amount and the face image feature amount of an image photographed for each camera and photographing information of the image, and store the whole-body image feature amount, the face image feature amount, and the photographing information, which have been acquired, in the database in association with each other.

4. The person retrieval device according to claim 1 or 2,
further comprising:
a whole-body image extracting unit to extract a whole-body image from a received image;
a face image extracting unit to extract a face image from a received image;
a whole-body image feature amount extracting unit to extract a whole-body image feature amount from the whole-body image extracted by the whole-body image extracting unit; and
a face image feature amount extracting unit to extract a face image feature amount from the face image extracted by the face image extracting unit, wherein
the similarity calculating unit acquires the whole-body image feature amount from the whole-body image feature amount extracting unit and acquires the face image feature amount from the face image feature amount extracting unit.

5. The person retrieval device according to claim 4,
further comprising:
a camera image acquiring unit to acquire images captured by a plurality of cameras and photographing information; and
a person feature storing unit to acquire a whole-body image feature amount and a face image feature amount of an image photographed for each camera and photographing information of the image, and store the acquired whole-body image feature amount, the acquired face image feature amount, and the acquired photographing information in the database in association with each other, wherein
the whole-body image extracting unit extracts a whole-body image from the image acquired by the camera image acquiring unit,
the face image extracting unit extracts a face image from the image acquired by the camera image acquiring unit,
the whole-body image feature amount extracting unit extracts a whole-body image feature amount from the whole-body image of the image acquired by the camera image acquiring unit and outputs the whole-body image feature amount to the person feature storing unit, and
the face image feature amount extracting unit extracts a face image feature amount from the face image of the image acquired by the camera image acquiring unit and outputs the face image feature amount to the person feature storing unit.

6. The person retrieval device according to claim 1 or 2,
wherein the person retrieval unit, when generating the specific person photographing information, in a case where a plurality of pieces of camera identification information indicating an identical camera is included, eliminates the camera identification information indicating the identical camera at predetermined time intervals.

7. The person retrieval device according to claim 4,
wherein the whole-body image feature amount extracting unit, when receiving the image photographed by the camera, calculates the whole-body image feature amount corrected by using a correction amount for each of the cameras indicated by the camera identification information, and
the person retrieval device further comprises a whole-body image feature amount correcting unit to correct a correction amount used for the whole-body image feature amount extracting unit by using a whole-body image feature amount associated with a face image feature amount in which the second similarity exceeds the second threshold.

8. The person retrieval device according to claim 4,
further comprising a whole-body image feature amount correcting unit to replace the whole-body image feature amount of the specific person image with an whole-body image feature amount associated with the face image feature amount in which the second similarity exceeds the second threshold in a case where a difference value between the whole-body image feature amount associated with the face image feature amount in which the second similarity exceeds the second threshold and the whole-body image feature amount of the specific person image exceeds a third threshold.

9. The person retrieval device according to claim 1,
further comprising a threshold adjusting unit to set the first threshold using the first similarity accumulated on a basis of a result determined in advance by the classification unit and a similarity calculated on a basis of a whole-body image feature amount of each of different persons.

10. The person retrieval device according to claim 9,
wherein the threshold adjusting unit further sets the second threshold using the similarity calculated on a basis of a face image feature amount of each of different persons.

11. The person retrieval device according to claim 9 or 10,
further comprising a relearning determination unit to instruct the whole-body image feature amount extracting unit to execute learning processing for extracting a whole-body image feature amount from the whole-body image in a case where the first threshold cannot be adjusted by the threshold adjusting unit.

12. A person retrieval system comprising a person retrieval device to retrieve an image including a person as a retrieval target from among a plurality of images photographed by a plurality of cameras in accordance with a retrieval request from a monitoring terminal,
the person retrieval system including the monitoring terminal, the plurality of cameras, and the person retrieval device,
the person retrieval device includes:
a similarity calculating unit to refer to, when acquiring a whole-body image feature amount and a face image feature amount of a person in a specific person image in which the person as a retrieval target is indicated, a database that stores a whole-body image feature amount, a face image feature amount, and photographing information including camera identification information, a photographing position, and a photographing date and time in association with each other for each of images output from the plurality of cameras, calculate a first similarity indicating a similarity between the whole-body image feature amount of the specific person image and the whole-body image feature amount in the database, and calculate a second similarity indicating a similarity between the face image feature amount of the specific person image and the face image feature amount in the database;
a classification unit to determine whether the first similarity exceeds a first threshold and determine whether the second similarity exceeds a second threshold; and
a person retrieval unit to acquire, from the database, photographing information associated with a face image feature amount in which the second similarity exceeds a second threshold by using a determination result of the classification unit, calculate an area and a time period in which the person shown in the specific person image is likely to be photographed by using the acquired photographing information, and generate specific person photographing information including camera identification information in the area and the time period.

13. A person retrieval method for retrieving an image including a person as a retrieval target from among a plurality of images photographed by a plurality of cameras by using a person retrieval device, comprising:
referring to, by a similarity calculating unit in the person retrieval device, when acquiring a whole-body image feature amount and a face image feature amount of the person in a specific person image in which the person as a retrieval target is indicated, a database that stores a whole-body image feature amount, a face image feature amount, and photographing information including camera identification information, a photographing position, and a photographing date and time in association with each other for each of images output from the plurality of cameras;
calculating, by the similarity calculating unit, a first similarity indicating a similarity between the whole-body image feature amount of the specific person image and the whole-body image feature amount in the database;
calculating, by the similarity calculating unit, a second similarity indicating a similarity between the face image feature amount of the specific person image and the face image feature amount in the database;
determining, by a classification unit in the person retrieval device, whether the first similarity exceeds a first threshold;
determining, by the classification unit, whether the second similarity exceeds a second threshold;
acquiring, by a person retrieval unit in the person retrieval device from the database, photographing information associated with a face image feature amount in which the second similarity exceeds the second threshold by using a determination result of the classification unit;
calculating, by the person retrieval unit, an area and a time period in which the person indicated in the specific person image is likely to be photographed by using the acquired photographing information; and
generating, by the person retrieval unit, specific person photographing information including camera identification information in the area and the time period.

14. A person retrieval program causing a computer to operate as a person retrieval device that retrieves an image including a person as a retrieval target from among a plurality of images photographed by a plurality of cameras, the person retrieval program causing the computer to operate as:
a similarity calculating unit to refer to, when acquiring a whole-body image feature amount and a face image feature amount of a person in a specific person image in which the person as a retrieval target is indicated, a database that stores a whole-body image feature amount, a face image feature amount, and photographing information including camera identification information, a photographing position, and a photographing date and time in association with each other for each of images output from the plurality of cameras, calculate a first similarity indicating a similarity between the whole-body image feature amount of the specific person image and the whole-body image feature amount in the database, and calculate a second similarity indicating a similarity between the face image feature amount of the specific person image and the face image feature amount in the database;
a classification unit to determine whether the first similarity exceeds a first threshold and determine whether the second similarity exceeds a second threshold; and
a person retrieval unit to acquire, from the database, photographing information associated with a face image feature amount in which the second similarity exceeds a second threshold by using a determination result of the classification unit, calculate an area and a time period in which the person shown in the specific person image is likely to be photographed by using the acquired photographing information, and generate specific person photographing information including camera identification information in the area and the time period.
